# EUROPÄISCHE PATENTSCHRIFT

(11) **EP 3 393 232 B1**
(45) Veröffentlichungstag und Bekanntmachung des Hinweises auf die Patenterteilung: **20.05.2026**
(21) Anmeldenummer: 16828731.6
(22) Anmeldetag: 21.12.2016
(51) Int. Cl.: A01G 7/04, H05B 45/00, H05B 45/10

(54) **LICHTSTRAHLERVORRICHTUNG UND VERFAHREN ZUR FÖRDERUNG DES RASENWACHSTUMS**
SPOTLIGHT DEVICE AND METHOD FOR PROMOTING LAWN GROWTH
DISPOSITIF PROJECTEUR DE LUMIERE ET PROCEDE POUR LA PROMOTION DE LA CROISSANCE DU GAZON

(30) Priorität: 21.12.2015 DE 102015016669; 21.12.2015 DE 202015008738 U
(43) Veröffentlichungstag der Anmeldung: 31.10.2018
(73) Patentinhaber: Rhenac Greentec AG, 53773 Hennef (DE)
(72) Erfinder: THEISEN, Horst, 53117 Bonn (DE)
(74) Vertreter: Fritzsche, Thomas
(86) Internationale Anmeldenummer: PCT/EP2016/082263
(87) Internationale Veröffentlichungsnummer: WO 2017/109008

(56) Entgegenhaltungen:
- WO-A1-2009/124577
- WO-A1-2012/147391
- WO-A1-2013/141824
- CN-U- 204 201 522
- US-A- 4 876 647
- US-A1- 2010 287 830
- US-A1- 2013 294 065
- US-A1- 2015 305 108

## Beschreibung

Die bautechnische Architektur von Sportarenen führt sehr häufig zu einem geringen Lichteinfall in den Stadionkörper. Die im Stadion verlegten Rasenplätze bekommen dadurch zu wenig Licht. Der Sportrasen braucht für seine Photosyntheserate und für Wachstum eine bestimmte Lichtmenge. Die zur Verfügung gestellte Lichtmenge muss über dem Lichtkompensationspunkt der Rasenpflanze liegen. Der Lichtkompensationspunkt einer Pflanze gibt an, ab welcher Beleuchtungsstärke das durch den Calvin-Zyklus fixierte Kohlenstoffdioxid und das bei ihrer Atmung ausgeschiedene Kohlenstoffdioxid gerade gleich sind.

Die Sportarenen werden immer stärker ausgelastet. Es finden im Abstand von meist wenigen Tagen Sportveranstaltungen statt oder es werden andere Großveranstaltungen auf dem Rasen durchgeführt, weshalb in diesen Fällen der Sportrasen abgedeckt werden muss. Die vielen Veranstaltungen nehmen dem Sportrasen die Zeit zur Regeneration. Zudem führt das Problem der geringen Verfügbarkeit von Licht zu Schäden an der Rasenpflanze.

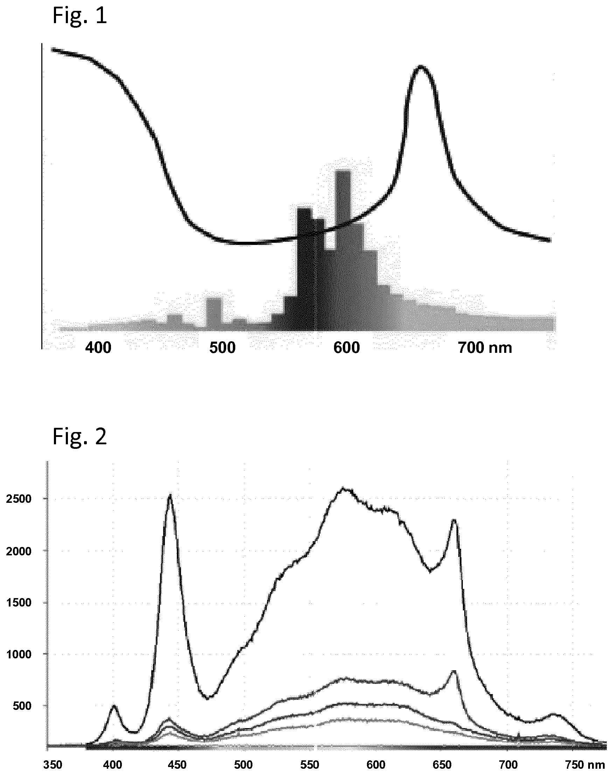

Seit mehreren Jahren werden nun verstärkt Kunst-Lichtquellen über den Rasenflächen angeordnet, um den Rasen mit Licht zu versorgen. Als Lichtquellen dienen dazu Natrium-Hochdruckdampflampen. Diese Lampen werden mit Anschlussleistungen von 400 W - 1000 W betrieben. Natrium-Hochdruckdampflampen sind durch ihr Emissionsmaximum gut als Zusatzbelichtung (Assimilationslicht) im Zierpflanzenanbau geeignet. Diese Lampen verfügen neben einer Verbreiterung der Na-Emissionslinien im gelben Bereich (590 nm) auch über eine Linie im roten (670 nm) Bereich, wie aus der FIG. 1 zusehen ist. Die Photosyntheserate der Rasenpflanzen findet abhängig von der Planzenart im Bereich von 445-460 nm (blau) und bei 630-670 nm (rot) statt, wie es in der FIG. 2 dargestellt ist.

Die derzeit eingesetzten Natrium-Hochdruckstrahler haben eine Reihe von nachteiligen Eigenschaften, die sich auf die Qualität des Sportrasens und auf die Energiebilanz der Sportarena auswirken.

Beispielsweise werden von der Anschlussleistung von 1000 W nur etwa 8-10% in sichtbares Licht umgewandelt. Der Rest der eingebrachten Energie wird in Wärmestrahlung umgewandelt. Von den etwa 8-10% des sichtbaren Lichtes wird dann wiederum nur der Teil, der sich im Bereich von 630 nm - 665 nm befindet, von dem Rasen für die Photosynthese genutzt.

In der US 2015/0305108 A1 wird eine Vorrichtung beschrieben, welche aus einer Vielzahl von Sätzen lichtemittierender Dioden besteht. Weiter werden diese Sätze von lichtemittierenden Dioden zentral über eine Steuervorrichtung sowie Treibern gesteuert. Hierbei kann die Steuereinrichtung mit einem Computer programmiert werden, um die Lichtintensität von jedem Satz von lichtemittierenden Dioden einzustellen und zu steuern.

Die US 2013/0294065 A1 beschreibt ein Beleuchtungssystem mit eine LED-Steuerung und eine LED-Anordnung. Hierbei umfasst die LED-Anordnung eine erste und zweite Teilanordnung und ist mit der LED-Steuerung gekoppelt. Weiter beinhaltet das Beleuchtungssystem eine Antenne, mit welcher die LED-Teilanordnungen bezüglich ihrer Wellenspektren angepasst werden können, wenn die Antenne ein Eingangssignal empfängt und über einen LED-Controller die Signale weiter an die LED-Steuerung kommuniziert.

Die US 2010/0287830 A1 beschreibt eine Vollspektrum-Sonnenscheinsimulationsvorrichtung zur Unterstützung biologischen Wachstums. Hierbei umfasst die Vorrichtung ein Leuchtdiodenmodul und eine Photoperiodensteuerung. Das Leuchtdiodenmodul umfasst wiederum eine Leiterplatte mit mehreren Leuchtdioden, wobei deren Lumineszenzspektrum im Wellenlängenbereich von 350 nm bis 800 nm liegt. Die mit dem Leuchtdiodenmodul verbundene Photoperiodensteuerung ist für die Leuchtperioden, die Farbtemperaturen und die Abstrahlwinkel des von den Leuchtdioden abgestrahlten Lichts konzipiert. Die CN 204201522 U beschreibt ein Pflanzenbeleuchtungssteuersystem, wobei dieses mehrere LED-Module umfasst, welche ein unterschiedliches Wellenlängenspektrum aufweisen. Weiter umfasst das System ein Steuermodul, um die LED-Module zu steuern. Hierbei stellt das Steuermodul für das Pflanzenwachstum geeignete Beleuchtungsbedingungen bereit.

WO 2009/124577 A1 und WO 2012/147391 A1 zeigen alternative Lichtstrahlervorrichtungen zur Förderung des Rasenwachstums.

Der in Wärmestrahlung umgewandelte Anteil der eingesetzten Energie kann den Rasen im Boden zusätzlich zu einer Rasen-Heizung im Winter erwärmen. Die Wärmestrahlung wird dabei durch eine Rasentragschicht aus Quarzsand gespeichert und erhöht damit das Temperaturmomentum an der Rasenwurzel und am Rasenblatt. Dieses Temperaturverhalten ist an kalten Wintertagen vorteilhaft, in der meisten Zeit der künstlichen Bestrahlung jedoch schlecht für die Rasenwurzel. Die Rasenwurzel benötigt mehr Wasser oder drosselt das Wachstum, wodurch das Rasenblatt verbrennen kann. Die mit Natrium-Hochdruckdampf betriebenen Rasenwachstums-Strahler sind
während der Bestrahlungszeit meist auf mobilen Lichtträgereinheiten angebracht, wobei die Lichtträgereinheiten in Zeitabständen über den Rasen bewegt und positioniert werden. Während dieser Zeit kann der Rasen weder gedüngt noch bewässert werden, da die Natrium-Hochdruckdampflampen nicht in ihrer Leistung gedrosselt bzw. gedimmt werden können und sie daher die gesamte Einschaltzeit mit der gesamten Wärmestrahlung, die sie abgeben (bei 1000 W ca. 900 W) auf den Sportrasen brennen. Die Rasentragschicht aus Quarz speichert die Wärme und die Rasenblätter verbrennen ohne ausreichende Bewässerung. Zudem wird zur Aufbesserung der Rasenfläche immer wieder Rasen-Saatgut aufgebracht. Dieses Saatgut ist der Abwärme der Lichteinheiten ausgesetzt und keimt dadurch teilweise nicht richtig aus.

Eine Aufgabe der Erfindung besteht darin, die Nachteile der zuvor beschriebenen herkömmlichen Belichtungssysteme zu überwinden, insbesondere soll eine intelligente Lichtbestrahlung zur Verfügung gestellt werden, die nur so viel Energie einsetzt wie gerade notwendig ist, um die Voraussetzung für das Rasenwachstum unter energetisch optimalen Bedingungen zu ermöglichen. Eine weitere Aufgabe der Erfindung besteht darin, die Lichtbestrahlung optimal auf die Umgebungstemperatur und/oder die lichtspektrale Zusammensetzung, welche gerade vor Ort benötigt wird, einzustellen. Eine weitere Aufgabe der Erfindung besteht darin, die Qualität des Rasens im Jahresverlauf über 12 Monate und insbesondere in den Wintermonaten zu erhalten.

Die Aufgabe wird durch eine erfindungsgemäße Lichtstrahlervorrichtung sowie ein Verfahren zur Förderung des Rasenwachstums mit den in den Ansprüchen definierten Merkmale gelöst.

In den Unteransprüchen sind vorteilhafte Weiterbildungen und bevorzugte Ausführungsformen angegeben.

Erfindungsgemäß wird eine Lichtstrahlervorrichtung zur Förderung des Rasenwachstums, insbesondere von Sportrasen, zur Verfügung gestellt, wobei die Vorrichtung mindestens eine LED-Platine und eine Steuer-/Regeleinheit, welche mindestens drei Kanäle umfasst, aufweist. Weiter weist die Lichtstrahlervorrichtung ein Spektrometer aufweist, welches mit der eine Steuer-/Regeleinheit verbunden ist. Die Lichtstrahlervorrichtung verfügt zudem über eine Messeinheit, einen IR-tastenden Messkopf-Temperaturgeber, einen Leistungsdimmer und/ oder einen DMX-Umsetzer. Die Lichtstrahlervorrichtung kann dabei auf Lichtträgereinheiten angebracht und über den Rasen bewegt werden. Vorteilhafterweise sind diese Lichtträgereinheiten höhenverstellbar, wodurch die Lichtstrahlervorrichtung in einer Höhe von minimal 200 mm, bevorzugt von minimal 500 mm bis maximal 2500 mm, besonders bevorzugt bis maximal 1800 mm über der Rasenoberfläche angeordnet werden kann. Die genaue Positionierung der Lichtträgereinheiten kann dabei durch den Rasenpfleger manuell und/oder vollautomatisch erfolgen.

Erfindungsgemäß verfügt die Lichtstrahlervorrichtung über eine LED-Platine, wobei diese mit integrierten Schaltkreisen und speziellen LED-Aufnahmen zum Aufnehmen von Einzel-LEDs ausgestattet sein kann.

Weiter verfügt die erfindungsgemäße Lichtstrahlervorrichtung über eine Steuer-/Regeleinheit, welche beispielsweise als Steuerplatine ausgebildet sein kann. Die Steuer-/Regeleinheit überwacht das Temperaturverhalten der LEDs auf der Platine und regelt bei Übertemperatur die Leistung an den LEDs herunter.

Die Steuer-/Regeleinheit kann über mehrere Kanäle verfügen, von denen je ein Kanal einer LED auf der LED-Platine angesteuert werden kann. Es können jedoch auch mehr als eine LED in entsprechender Schaltung, z. B. in Reihenschaltung, an einem Kanal betrieben werden.

Gemäß einer vorteilhaften Ausführungsform der erfindungsgemäßen Lichtstrahlervorrichtung verfügt die Steuer-/Regeleinheit über mindestens sechs oder acht, bzw. über mindestens 10 oder 12 Kanäle.

Die Kanäle eignen sich dazu, die einzelnen Wellenspektren von 0-100% zu regeln. Diese Regelung macht es möglich, dass exakt dasjenige Lichtspektrum (Wellenlängen) zugeschaltet werden kann, welches der Rasen braucht, um optimal wachsen zu können. Zum Beispiel braucht der Rasen mehr Rotlichtanteile (630-660 nm) in der Keimungsphase oder wenn er schneller wachsen soll, oder er braucht mehr Blau-Lichtanteile (440-460 nm), um stärkere Zellstrukturen auszubilden, da stärkere Zellstrukturen die Belastbarkeit des Sportrasens erhöhen.

Das Lichtspektrum aus dem Tag (siehe hierzu Normlichtkurve D65) verändert sich über den Tag und während des Jahresverlaufs. Die spektrale Zusammensetzung des natürlichen Lichts, das auf den Sportrasen fällt, kann durch die erfindungsgemäße Lichtstrahlervorrichtung so ergänzt werden, wie es der Rasen für die jeweilige Wachstumsphase benötigt.

Gemäß einer vorteilhaften Ausführungsform der erfindungsgemäßen Lichtstrahlervorrichtung weist diese mindestens eine LED und/oder eine UV-LED und/oder eine OLED (organische Leuchtdiode) auf, welche beispielsweise bevorzugt Wellenlängen im blauen, roten und/oder im UV-Spektralbereich aufweisen. Bevorzugt weist jedoch die erfindungsgemäße Lichtstrahlervorrichtung mindestens eine UV-LED mit Peak bei 395 nm, und/oder mindestens eine LED mit Peak bei 440 nm und/oder mindestens eine LED mit Peak bei 660 nm, auf. Gemäß einer bevorzugten Ausführungsform der erfindungsgemäßen Lichtstrahlervorrichtung wird diese mit acht LED-Platinen mit jeweils 40 W ausgestattet. Zusammen mit einem Netztransformator ergibt sich eine maximale Anschlussleistung von ca. 350 W. Von diesen 350 W Anschlussleistung werden mindestens ca. 15% in für die Synthese brauchbares Licht umgewandelt. Das emittierte Licht ist dabei auf die Photosyntheserate der Pflanze abgestimmt und wird voll in Biomasse umgesetzt, d. h. Längenwachstum, Wurzelwachstum, Verwurzelung und Stärkung der Zellstrukturen.

Gemäß einer vorteilhaften Ausführungsform der erfindungsgemäßen Lichtstrahlervorrichtung verfügt diese zudem über einen IR-Wärmestrahler, welcher beispielsweise in Form eines Wärmestrahlstabs ausgebildet sein kann. Dieser IR-Wärmestrahler kann in den Wintermonaten zugeschaltet werden und kann damit die Blatttemperatur des Rasens erhöhen, was neben der Wurzeltemperatur für den Rasen wichtig ist. Der IR-Wärmestrahler kann dabei an die Steuer-/Regeleinheit der erfindungsgemäßen Lichtstrahlervorrichtung angeschlossen werden oder an eine separate Steuer-/Regeleinheit angeschlossen sein und über diese gesteuert werden.

Die erfindungsgemäße Lichtstrahlervorrichtung verfügt zudem über ein Spektrometer, und eine Messeinheit, einen IR-tastenden Messkopf-Temperaturgeber, einen Leistungsdimmer und/oder einen DMX-Umsetzer. Der IR-Temperaturgeber tastet mittels eines IR-Strahls die Rasenoberfläche ab und meldet die erfasste Temperatur der Steuer-/Regeleinheit der erfindungsgemäßen Lichtstrahlervorrichtung. Die Steuer-/Regeleinheit vergleicht dann diesen Wert, welcher im Bereich von 0-10 V liegen kann, mit
einem hinterlegten Soll-Wert und gibt dann - je nach Soll-Ist-Abgleich - einen Stellwert in ein Ausgangssignal. Das Ausgangssignal kann wiederum zwischen 0 und 10 V liegen. Dieses Ausgangssignal wird wiederum von einem DMX-Umsetzer (Digital Multiplexer), welcher ebenfalls Bestandteil der erfindungsgemäßen Lichtstrahlervorrichtung ist, von 0-10 V auf DMX umgesetzt. Hierbei entsprechen 0-10 V einem Wert von 1-255. Über den DMX-Umsetzer wird ein Wert von 0-255 auf einen Leistungsdimmer, welcher ebenfalls von der erfindungsgemäßen Lichtstrahlervorrichtung umfasst werden kann, übertragen. Der Leistungsdimmer kann dabei ein Phasenanschnittsdimmer oder ein Phasenabschnittsdimmer sein. Der Leistungsdimmer regelt dann die abzugebende Leistung des IR-Wärmestrahlers.

Gemäß einer weiteren vorteilhaften Ausführungsform der erfindungsgemäßen Lichtstrahlervorrichtung kann die Steuer-/Regeleinheit zusätzlich auf dem gleichen Weg auch Lichtintensitäten aufnehmen und so dafür sorgen, dass genau das gewünschte Lichtspektrum in der gewünschten Intensität und bedarfsgerechten Zusammensetzung für den Einsatz zur Rasenbestrahlung mit Kunstlicht verwendet wird.

Gemäß einer weiteren vorteilhaften Ausführungsform der erfindungsgemäßen Lichtstrahlervorrichtung kann diese in Verbindung mit einem Spektrometer so betrieben werden, dass nur das jeweilige Lichtspektrum ausgestrahlt wird, das dem Rasen aktuell fehlt oder für eine bestimmte Rasenzone gerade gewünscht ist, zum Beispiel Licht für Schnellkeimung nach Aussaat in stark beanspruchten Spielfeld-Bereichen.

Gemäß einer weiteren vorteilhaften Ausführungsform der erfindungsgemäßen Lichtstrahlervorrichtung kann diese einzeln an einer Einzelaufhängung oder an einer beliebigen Trageinheit befestigt und betrieben werden. Die erfindungsgemäße Lichtstrahlervorrichtung ist jedoch auch mit weiteren Strahlern zu einem System kombinierbar. Neben der technischen Flexibilität sind auch energetische Vorteile der erfindungsgemäßen Lichtstrahlervorrichtung gegenüber konventionellen Beleuchtungssystemen mit Gasdruckentladungslampen herauszustellen.

Wie aus Tabelle 1 ablesbar ist, wird mit ca. 35% der Leistung einer Natrium-Hochdruckentladungslampe aus dem Stand der Technik (SdT) ca. das 3-fache an photosyntheseaktivem Licht mit der erfindungsgemäßen Lichtstrahlervorrichtung erzeugt.

**Tabelle 1**

| *Leuchtentyp* | *Anschlussleistung* | *Photosynthese verwertbares Licht bei 1.850 mm Lichtpunkthöhe* |
|---|---|---|
| Natrium-Hochdruck Entladungslampe (SdT) | 1.000 Watt | ca. 65 µmol/m² s-1 |
| Erfindungsgemäße Lichtstrahlervorrichtung | 350 Watt | ca. 185 µmol/m² s-1 |

Die Erfindung weist zusätzlich ein Verfahren zur Förderung des Rasenwachstums, insbesondere von Sportrasen, mittels einer Lichtstrahlervorrichtung auf, wie sie beispielsweise in Anspruch 1 beschrieben ist. Mittels des Verfahrens wird eine bedarfsgerechte Zusammensetzung von Lichtspektren und/oder -intensitäten für den Einsatz zur Rasenbestrahlung mit Kunstlicht mittels der Lichtstrahlervorrichtung eingestellt und es wird anschließend der Rasen mit dieser Zusammensetzung bestrahlt.

Wenn die Lichtstrahlervorrichtung zusätzlich einen IR-Wärmestrahler (8), einen IR-tastenden Messkopf-Temperaturgeber, einen DMX-Umsetzer und einen Leistungsdimmer aufweist, wird gemäß einer vorteilhaften Ausführungsform des erfindungsgemäßen Verfahrens die Rasenoberfläche vom IR-Temperaturgeber mittels eines IR-Strahls abgetastet und die erfasste Temperatur an die Steuer-/Regeleinheit übermittelt. Anschließend wird mit diesem Temperaturwert einen Soll-Ist-Abgleich durchführt, um damit einen Stellwert zu ermitteln, der in ein Ausgangssignal überführt wird. Das Ausgangssignal wiederum wird dann von einem DMX-Umsetzer auf DMX umgesetzt. Anschließend wird der umgesetzte Wert vom DMX-Umsetzer auf den Leistungsdimmer übertragen, der wiederum anschließend die abzugebende Leistung des IR-Wärmestrahlers regelt.

Gemäß einer weiteren vorteilhaften Ausführungsform des erfindungsgemäßen Verfahrens führt die Steuer-/Regeleinheit den Soll-Ist-Abgleich mit Werten von 0-10 V durch, wobei das Ausgangssignal zwischen 0 und 10 V liegen kann und/oder wobei der DMX-Umsetzer das Ausgangssignal von 0-10 V in Werte von 1-255 umsetzt. Der DMX-Umsetzer kann dann einen Wert von 0-255 auf den Leistungsdimmer übertragen.

Wenn die Lichtstrahlervorrichtung zusätzlich ein Spektrometer aufweist, können gemäß dem erfindungsgemäßen Verfahren Lichtspektren gemessen werden und es wird anschließend nur das jeweilige Lichtspektrum ausgestrahlt, das dem Rasen aktuell fehlt oder gerade gewünscht wird.

Nachfolgend wird die erfindungsgemäße Lichtstrahlervorrichtung von Ausführungsbeispielen in Zeichnungen näher beschrieben. Die Erläuterungen sind lediglich beispielhaft und schränken den allgemeinen Erfindungsgedanken nicht ein.

Es zeigen:
- FIG. 1: ein Absorptionsspektrum einer Natrium-Hochdruckdampflampe aus dem Stand der Technik mit Peak bei 630 nm;
- FIG. 2: ein Absorptionsspektrum einer Rasenpflanze mit Peak bei 440 nm und 640 nm;
- FIG. 3: eine schematische Darstellung einer Ausführungsform der erfindungsgemäßen Lichtstrahlervorrichtung in Draufsicht von unten;
- FIG. 4: eine schematische Darstellung der Schnittebene B-B aus FIG. 3 in seitlicher Ansicht einer Ausführungsform der erfindungsgemäßen Lichtstrahlervorrichtung.

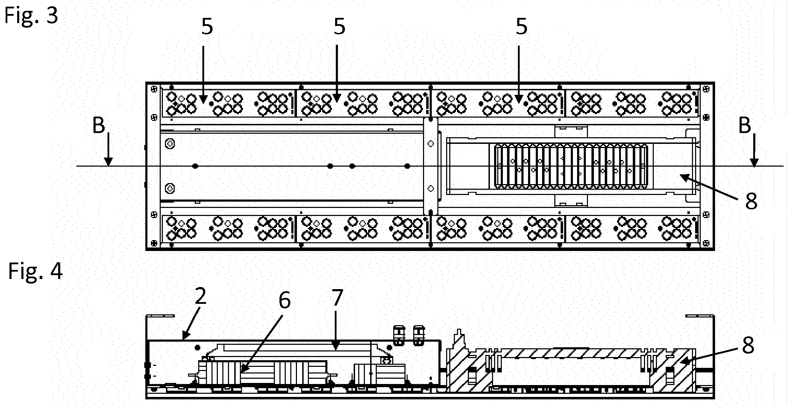

FIG. 3 sowie FIG. 4 zeigen eine Ausführungsform der erfindungsgemäßen Lichtstrahlervorrichtung in einer schematischen Darstellung als Draufsicht von unten sowie als Längsschnitt im Bereich B-B. Zu sehen sind mehrere LED-Platinen 5 sowie die Steuer-/Regeleinheit 7. Weiter zu sehen ist ein Netzteil 6, sowie ein IR-Wärmestrahler 8.

## Patentansprüche

1. Lichtstrahlervorrichtung zur Förderung des Rasenwachstums, insbesondere von Sportrasen, wobei die Vorrichtung mindestens eine LED-Platine (5) und eine Steuer-/Regeleinheit (7) enthält, die mindestens drei Kanäle umfasst, wobei die Vorrichtung zusätzlich ein Spektrometer aufweist, welches mit der Steuer-/Regeleinheit (7) verbunden ist und eine Messeinheit, einen IR-tastenden Messkopf-Temperaturgeber, einen Leistungsdimmer und/oder einen DMX-Umsetzer aufweist, wobei das Spektrometer betreibbar ist, um nur das jeweilige Lichtspektrum auszustrahlen, das dem Rasen aktuell fehlt oder für eine bestimmte Rasenzone gewünscht ist.

2. Lichtstrahlervorrichtung nach Anspruch 1, **dadurch gekennzeichnet, dass** die LED-Platine (5) integrierte Schaltkreise sowie spezielle Aufnahmen zum Aufnehmen von Einzel-LEDs aufweist.

3. Lichtstrahlervorrichtung nach einem der vorhergehenden Ansprüche, **dadurch gekennzeichnet, dass** die Steuer-/Regeleinheit (7) eine Steuerplatine ist und/oder mehrere Kanäle aufweist, von denen je ein Kanal einer Einzel-LED auf der LED-Platine (5) angesteuert wird, und/oder dass mehr als eine LED in entsprechender Schaltung an einem Kanal betrieben wird.

4. Lichtstrahlervorrichtung nach einem der vorhergehenden Ansprüche, **dadurch gekennzeichnet, dass** die LED-Platine (5) mindestens eine LED und/oder eine UV-LED und/oder eine OLED aufweist, und/oder dass die LED-Platine (5) mindestens eine UV-LED mit Peak bei 395 nm, mindestens eine LED mit Peak bei 440 nm und mindestens eine LED mit Peak bei 660 nm aufweist, und/oder dass die Lichtstrahlervorrichtung einzeln an einer Einzelaufhängung oder an einer beliebigen Trageinheit befestigt und betrieben wird, und/oder dass diese mit weiteren Strahlern zu einem System kombiniert wird.

5. Lichtstrahlervorrichtung nach einem der vorhergehenden Ansprüche, **dadurch gekennzeichnet, dass** die Vorrichtung einen IR-Wärmestrahler (8) aufweist, und/oder dass der IR-Wärmestrahler (8) an die Steuer-/Regeleinheit (7) angeschlossen ist.

6. Lichtstrahlervorrichtung nach einem der vorhergehenden Ansprüche, **dadurch gekennzeichnet, dass** die Vorrichtung zusätzlich eine Messeinheit und/oder einen Leistungsdimmer aufweist und mit der Steuer-/Regeleinheit (7) verbunden ist.

7. Verfahren zur Förderung des Rasenwachstums, insbesondere von Sportrasen mittels einer Lichtstrahlervorrichtung wobei die Lichtstrahlervorrichtung mindestens eine LED-Platine (5), eine Steuer-/Regeleinheit (7), einen IR-Wärmestrahler (8), einen IR-tastenden Messkopf-Temperaturgeber, einen DMX-Umsetzer, ein Spektrometer und einen Leistungsdimmer aufweist, wobei der IR-Temperaturgeber mittels eines IR-Strahls die Rasenoberfläche abtastet und die erfasste Temperatur an die Steuer-/Regeleinheit (7) übermittelt und diese anschließend mit diesem Temperaturwert einen Soll-Ist-Abgleich durchführt, um damit einen Stellwert zu ermitteln, der in ein Ausgangssignal überführt wird, wobei das Ausgangssignal wiederum von dem DMX-Umsetzer auf DMX umgesetzt wird, und anschließend der umgesetzte Wert vom DMX-Umsetzer auf den Leistungsdimmer übertragen wird, wobei dieser anschließend die abzugebende Leistung des IR-Wärmestrahler (8) regelt, **dadurch gekennzeichnet, dass** eine bedarfsgerechte Zusammensetzung von Lichtspektren und -Intensitäten für den Einsatz zur Rasenbestrahlung mit Kunstlicht mittels der Lichtstrahlervorrichtung gemessen werden und/oder anschließend das jeweilige Lichtspektrum ausgestrahlt wird, dass dem Rasen aktuell fehlt oder gerade gewünscht wird.

8. Verfahren nach Anspruch 7, **dadurch gekennzeichnet, dass** die Steuer-/Regeleinheit (7) den Soll-Ist-Abgleich mit Werten von 0-10 V durchführt, und/oder dass das Ausgangssignal zwischen 0 und 10 V liegt, und/oder dass der DMX-Umsetzer das Ausgangssignal von 0-10 V in Werte von 1-255 umsetzt, und/oder dass der DMX-Umsetzer einen Wert von 0-255 auf den Leistungsdimmer überträgt.

9. Verwendung einer Vorrichtung nach einem der Ansprüche 1 bis 6 zur Rasenpflege.

10. Verwendung nach Anspruch 9, **dadurch gekennzeichnet, dass** die Rasenpflege in einem Sportstadium durchgeführt wird.

## Claims

1. A light emitting device for promoting grass growth, in particular on sports turf, wherein the device comprises at least one LED board (5) and a control unit (7) comprising at least three channels, wherein the device further comprises a spectrometer connected to the control unit (7) and includes a measuring unit, an IR-sensing measuring head temperature sensor, a power dimmer, and/or a DMX converter, wherein the spectrometer is operable to emit only the specific light spectrum that the lawn currently lacks or that is desired for a particular lawn zone.

2. Lighting device according to claim 1, **characterized in that** the LED board (5) comprises integrated circuits as well as special sockets for receiving individual LEDs.

3. Lighting device according to one of the preceding claims, **characterized in that** the control unit (7) is a control board and/or comprises multiple channels, each of which controls a single LED on the LED board (5), and/or that more than one LED is operated in a corresponding circuit on a single channel.

4. A light emitting device according to any of the preceding claims, **characterized in that** the LED board (5) comprises at least one LED and/or one UV LED and/or one OLED, and/or **in that** the LED board (5) comprises at least one UV LED with a peak at 395 nm, at least one LED with a peak at 440 nm, and at least one LED with a peak at 660 nm, and/or that the light emitter device is individually mounted on a single suspension or on any support unit and operated, and/or that it is combined with additional emitters to form a system.

5. Lighting device according to one of the preceding claims, **characterized in that** the device comprises an IR heat emitter (8), and/or that the IR heat emitter (8) is connected to the control unit (7).

6. Lighting device according to any of the preceding claims, **characterized in that** the device additionally comprises a measuring unit and/or a power dimmer and is connected to the control unit (7).

7. A method for promoting grass growth, particularly of sports turf, using a light emitting device, wherein the light emitting device comprises at least one LED board (5), a control unit (7), an IR heat emitter (8), an IR-sensing measuring head temperature sensor, a DMX converter, a spectrometer, and a power dimmer, wherein the IR temperature sensor scans the turf surface using an IR beam and transmits the detected temperature to the control unit (7), which then performs a setpoint-actual to thereby determine a control value, which is converted into an output signal, wherein the output signal is in turn converted to DMX by the DMX converter, and subsequently the converted value is transmitted from the DMX converter to the power dimmer, which then regulates the output power of the IR heat emitter (8), **characterized in that** a demand-based composition of light spectra and intensities for use in illuminating a lawn with artificial light is measured by means of the light emitter device and/or the respective light spectrum is subsequently emitted that the lawn currently lacks or currently requires.

8. The method according to claim 7, **characterized in that** the control unit (7) performs the setpoint-actual comparison using values ranging from 0 to 10 V, and/or that the output signal lies between 0 and 10 V, and/or that the DMX converter converts the output signal from 0-10 V into values from 1 to 255, and/or that the DMX converter transmits a value from 0 to 255 to the power dimmer.

9. Use of a device according to any one of claims 1 to 6 for lawn care.

10. Use according to claim 9, **characterized in that** the lawn care is performed in a sports stadium.

## Revendications

1. Dispositif d'éclairage destiné à favoriser la croissance du gazon, en particulier du gazon de terrain de sport, ledit dispositif comprenant au moins une carte à LED (5) et une unité de commande et de régulation (7) comportant au moins trois canaux, le dispositif comportant en outre un spectromètre relié à l'unité de commande et de régulation (7) et comportant une unité de mesure, un capteur de température à tête de mesure à détection IR, un variateur de puissance et/ou un convertisseur DMX, le spectromètre pouvant être utilisé pour émettre uniquement le spectre lumineux dont le gazon manque actuellement ou qui est souhaité pour une zone de gazon déterminée.

2. Dispositif de projecteur selon la revendication 1, **caractérisé en ce que** la carte à LED (5) comporte des circuits intégrés ainsi que des logements spéciaux destinés à recevoir des LED individuelles.

3. Dispositif d'éclairage selon l'une des revendications précédentes, **caractérisé en ce que** l'unité de commande/régulation (7) est une carte de commande et/ou comporte plusieurs canaux, dont chacun commande une LED individuelle sur la carte à LED (5), et/ou **en ce que** plus d'une LED est exploitée dans un circuit correspondant sur un canal.

4. Dispositif d'éclairage selon l'une des revendications précédentes, **caractérisé en ce que** la carte à LED (5) comporte au moins une LED et/ou une LED UV et/ou une OLED, et/ou **en ce que** la carte à LED (5) comporte au moins une LED UV avec un pic à 395 nm, au moins une LED avec un pic à 440 nm et au moins une LED avec un pic à 660 nm, et/ou **en ce que** le dispositif d'éclairage est fixé et utilisé individuellement sur une suspension individuelle ou sur une unité de support quelconque, et/ou **en ce qu'**il est combiné avec d'autres projecteurs pour former un système.

5. Dispositif d'éclairage selon l'une des revendications précédentes, **caractérisé en ce que** le dispositif comporte un radiateur thermique IR (8), et/ou **en ce que** le radiateur thermique IR (8) est raccordé à l'unité de commande/régulation (7).

6. Dispositif de projecteur selon l'une des revendications précédentes, **caractérisé en ce que** le dispositif comporte en outre une unité de mesure et/ou un variateur de puissance et est relié à l'unité de commande/régulation (7).

7. Procédé pour favoriser la croissance du gazon, en particulier du gazon de terrain de sport, à l'aide d'un dispositif d'éclairage, ledit dispositif d'éclairage comprenant au moins une carte à LED (5), une unité de commande et de régulation (7), un radiateur thermique IR (8), un capteur de température à tête de mesure à balayage IR, un convertisseur DMX, un spectromètre et un variateur de puissance, le capteur de température IR balayant la surface du gazon au moyen d'un faisceau IR et transmettant la température détectée à l'unité de commande/régulation (7), laquelle effectue ensuite une comparaison entre la valeur de consigne et la valeur réelle afin de déterminer une valeur de réglage qui est convertie en un signal de sortie, le signal de sortie étant à son tour converti en DMX par le convertisseur DMX, puis la valeur convertie étant transmise par le convertisseur DMX au variateur de puissance, lequel régule ensuite la puissance à fournir par le radiateur thermique IR (8), **caractérisé en ce qu'**une composition adaptée aux besoins de spectres lumineux et d'intensités est mesurée pour une utilisation dans l'irradiation de la pelouse avec de la lumière artificielle au moyen du dispositif de rayonnement lumineux et/ou **en ce que** le spectre lumineux correspondant est ensuite émis, spectre dont la pelouse manque actuellement ou qui est justement souhaité.

8. Procédé selon la revendication 7, **caractérisé en ce que** l'unité de commande/régulation (7) effectue la comparaison entre la valeur de consigne et la valeur réelle à l'aide de valeurs comprises entre 0 et 10 V, et/ou **en ce que** le signal de sortie est compris entre 0 et 10 V, et/ou que le convertisseur DMX convertit le signal de sortie de 0 à 10 V en valeurs comprises entre 1 et 255, et/ou que le convertisseur DMX transmet une valeur comprise entre 0 et 255 au variateur de puissance.

9. Utilisation d'un dispositif selon l'une des revendications 1 à 6 pour l'entretien des pelouses.

10. Utilisation selon la revendication 9, **caractérisée en ce que** l'entretien de la pelouse est effectué dans un stade sportif.
